# EUROPEAN PATENT APPLICATION

(11) **EP 2 485 468 A1**
(43) Date of publication of application: **08.08.2012**
(21) Application number: 12154091.8
(22) Date of filing: 06.02.2012
(51) Int. Cl.: H04N 1/00, H04N 1/40

(54) **Image forming system using image data read from a first confirmation copy as comparison signals for detecting image quality of further copies**

(30) Priority: 07.02.2011 JP 2011023557
(71) Applicant: Konica Minolta Business Technologies, Inc., Tokyo 100-0005 (JP)
(72) Inventor: Yamaguchi, Hiroshi, Tokyo, 105-0005 (JP)
(74) Representative: Henkel, Breuer & Partner

(57) **Abstract**

Disclosed is an image forming system including: an output image reading control section reading an image formed on each of output materials to generate output image data when the image is formed on paper and the output materials are obtained by printing-out based on job data in which a plural-copy-execution number is set; a storage section storing output image data of a first output material generated by the output image reading control section as comparison image data; a comparison section comparing, with the comparison image data, output image data of another output material generated after the comparison image data is stored, to judge whether the output image data is identical with the comparison image data; and an operation control section suspending an operation related to the printing-out based on the job data when the comparison section judges that the output image data is not identical with the comparison image data.

## Description

### BACKGROUND OF THE INVENTION

### Field of the Invention

The present invention relates to an image forming system.

### Description of the Related Art

Conventionally, there is known an image forming system having a function to judge automatically or by a user whether or not images are properly formed on paper, for example, whether or not there is no stain, there is no misregistration, or/and colors are properly expressed, so as to detect paper which is judged that images are not properly formed thereon (poor image formation). (Hereinafter, such paper is referred to as wastepaper.)

For example, in order to detect wastepaper having a wrong page order (incorrect collating), Japanese Patent Application Laid-Open Publication No. 2010-215385 discloses a technology by which page numbers on sheets of paper are read, and the consecutiveness of the read page numbers is monitored, so as to detect the wastepaper. Furthermore, as a technology for inspecting a print content when printing-out is performed by using preprinted paper on which a pattern and/or a logo is preprinted, Japanese Patent Application Laid-Open Publication No. 2007-310567 discloses a technology by which a print document is read, the print document being generated by printing electronic master data on preprinted paper; image data corresponding to the print content of the print document is generated; an enable region of the image data is masked, the enable region being subjected to inspection; and the masked image data is collated with the electronic master data, so that whether the print contents thereof are identical or not is inspected.

However, according to the technology disclosed by Japanese Patent Application Laid-Open Publication No. 2010-215385, only sheets of paper having page numbers are subjected to wastepaper detection, and hence the wastepaper detection cannot be performed on sheets of paper having no page numbers. Furthermore, according to the technology disclosed by Japanese Patent Application Laid-Open Publication No. 2007-310567, it is necessary to set an image region subjected to the detection. Also, depending on a status of paper (paper color, additional printing and the like), it becomes necessary to perform image processing on a comparison image with which an output image is compared. The technology disclosed thereby is for detecting wastepaper based on a part of an image formed on paper, and hence if another part of the image is poorly formed, the paper cannot be detected as wastepaper.

### SUMMARY OF THE INVENTION

The present invention is made in view of the problems of such conventional technologies, and an object of the present invention is to increase the detection accuracy of paper which is judged that images are poorly formed thereon (wastepaper).

In order to achieve at least one object described above, according to an aspect of the present invention, there is provided an image forming system including: an output image reading control section which reads an image formed on each of a plurality of output materials to generate output image data when the image is formed on paper and the plurality of output materials is obtained by printing-out based on job data in which a plural-copy-execution number is set; a storage section which stores output image data of an given output material generated by the output image reading control section as comparison image data; a comparison section which compares, with the comparison image data, output image data of another output material generated by the output image reading control section after the comparison image data is stored in the storage section, to judge whether or not the output image data is identical with the comparison image data; and an operation control section which suspends an operation related to the printing-out based on the job data when the comparison section judges that the output image data is not identical with the comparison image data.

Preferably, the image forming system further includes: a comparison image data setting section which performs confirmation printing-out to confirm the image formed based on the job data, the confirmation printing-out by which the given output material is obtained, and stores the output image data of the given output material as the comparison image data in the storage section when an indication that a positive image confirmation result is obtained by the confirmation printing-out is inputted.

Preferably, the image forming system further includes: an input section which receives an instruction on comparison condition setting information to compare the output image data with the comparison image data, wherein the comparison section compares the output image data with the comparison image data to judge whether or not the output image data is identical with the comparison image data based on the comparison condition setting information.

Preferably, in the image forming system, the input section receives, as the comparison condition setting information, a selection instruction on an output speed mode in which priority is given to an output speed of the output materials or a selection instruction on a comparison accuracy mode in which priority is given to comparison accuracy, the comparison section reduces a data amount of each of the output image data and the comparison image data to compare the output image data with the comparison image data when the selection instruction on the output speed mode is received by the input section, and the comparison section compares all the output image data with all the comparison image data when the selection instruction on the comparison accuracy mode is received by the input section.

Preferably, in the image forming system, the input section receives an instruction on a thinning-out line number to reduce the data amount to compare the output image data with the comparison image data when the selection instruction on the output speed mode is received by the input section.

Preferably, in the image forming system, the input section receives an instruction on a shift amount to shift a position of the thinning-out line number page by page.

Preferably, in the image forming system, the input section receives, as the comparison condition setting information, an instruction on an allowable density range for a pixel of the output image data to a pixel of the comparison image data, and the comparison section compares a density value of the pixel of the output image data with a density value of the pixel of the comparison image data to judge whether or not the density value of the pixel of the output image data is within the allowable density range.

Preferably, in the image forming system, the input section receives, as the comparison condition setting information, an instruction on an abnormality detection pixel number used as a judgment standard to judge whether or not the output image data is identical with the comparison image data, and the comparison section judges that the output image data is not identical with the comparison image data when a number of the pixel of the output image data, the pixel having the density value being out of the allowable density range, is equal to or more than the abnormality detection pixel number.

Preferably, the image forming system further includes: a display section which displays, when the comparison section judges that the output image data is not identical with the comparison image data and the operation based on the job data is suspended, instruction information to the suspended operation based on the job data such that the instruction information is selectable.

Preferably, in the image forming system, the display section displays, as the instruction information, job stop information to stop the suspended operation, first resumption information to resume the suspended operation after performing correction processing, and second resumption information to resume the suspended operation, such that the job stop information, the first resumption information, and the second resumption information are selectable.

Preferably, the image forming system further includes: a resumption setting section which receives an instruction on a copy number and a page number when the first resumption information or the second resumption information is selected, the copy number and the page number from which the suspended operation resumes.

Preferably, the image forming system further includes: an image forming apparatus including: an image forming section which forms an image on paper based the job data; and the operation control section; and an output image reading apparatus provided on a downstream side of the image forming apparatus in a paper carry direction, the output image reading apparatus including: the output image reading control section; the storage section; and the comparison section.

### BRIEF DESCRIPTION OF THE DRAWING

The present invention is fully understood from the detailed description given hereinbelow and the accompanying drawings, which are given by way of illustration only, and thus are not intended as limits of the present invention, wherein:
FIG. 1 is a sectional view schematically showing the configuration of an image forming system according to a first embodiment of the present invention;
FIG. 2 is a control block diagram of the image forming system according to the first embodiment;
FIG. 3 shows an example of a comparison condition setting screen;
FIG. 4 is a first part of a flowchart of output image abnormality detection processing according to the first embodiment;
FIG. 5 is a second part of the flowchart of the output image abnormality detection processing;
FIG. 6 shows an example of an error screen;
FIGS. 7A to 7D show images in the output image abnormality detection processing;
FIG. 8 is a control block diagram of an image forming system according to a second embodiment of the present invention;
FIG. 9 is a first part of a flowchart of output image abnormality detection processing according to the second embodiment;
FIG. 10 is a second part of the flowchart of the output image abnormality detection processing; and
FIG. 11 is a third part of the flowchart of the output image abnormality detection processing.

### DESCRIPTION OF THE PREFERRED EMBODIMENT

### [First Embodiment]

In the following, a first embodiment of the present invention is described with reference to the accompanying drawings.

First, the configuration of an image forming system according to the first embodiment is described.

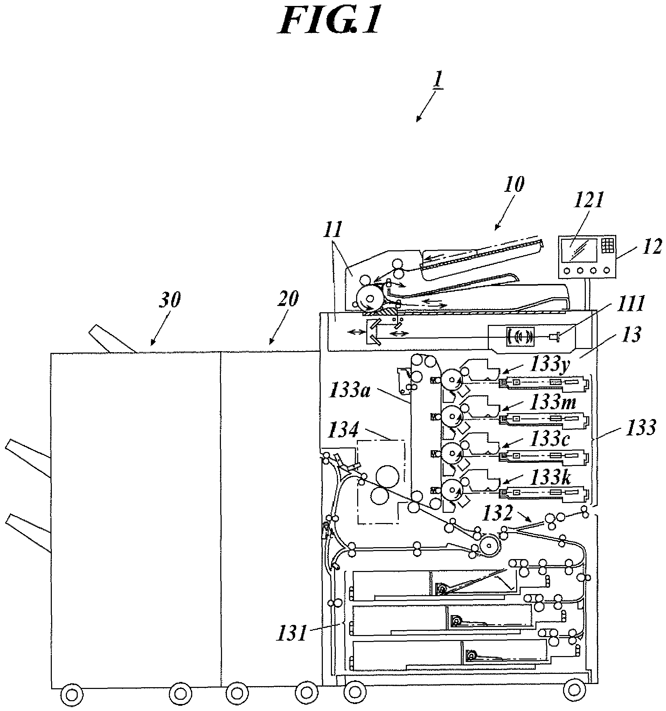

FIG. 1 is a sectional view schematically showing the configuration of an image forming system 1 according to the first embodiment.

As shown in FIG. 1, the image forming system 1 includes an image forming apparatus 10, an output image reading apparatus 20, and a finishing apparatus 30 disposed in the order named from the upstream side of a paper carry path (i.e. in a paper carry direction).

The image forming apparatus 10 reads an image from a document, and forms the read image on paper. Also, the image forming apparatus 10 receives, from an external apparatus or the like, print data in a PDL (Page Description Language) format, in a Tiff (Tagged Image File) format or the like, and also receives print setting data in which various output instructions are set for the print data, and forms an image on paper based on the received print data and print setting data, and the like. The image forming apparatus 10 includes an image reading section 11, an operation display section 12, and a printing section 13.

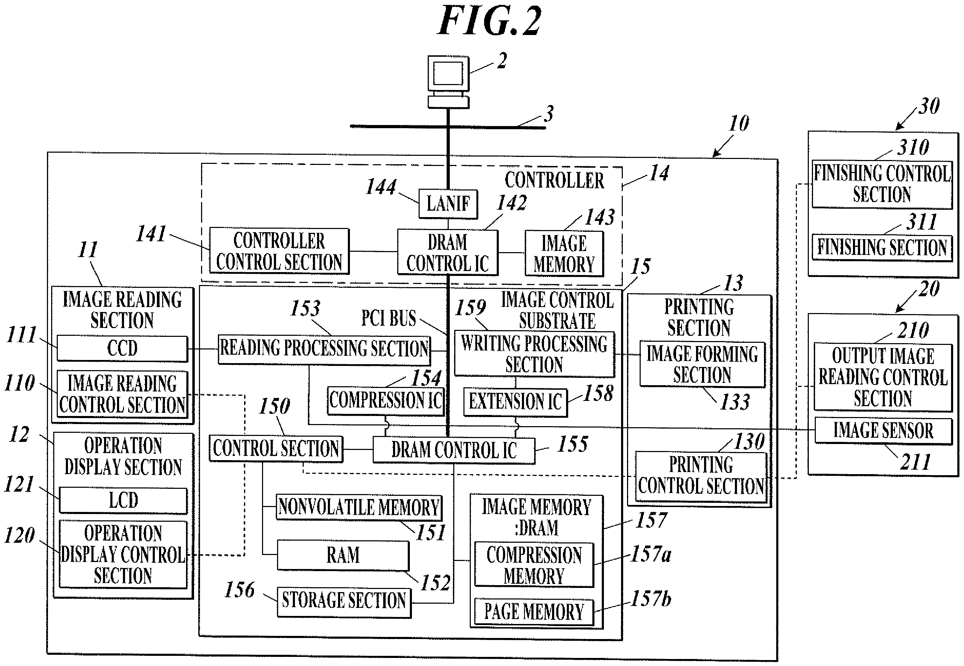

The image reading section 11 includes an auto document sending section called an ADF (Auto Document Feeder) and a reading section. The image reading section 11 reads an image of a document based on setting information received by the operation display section 12, and generates image data of analog signals. A document placed on a document tray of the auto document sending section is carried to a contact glass which is a reading point, and an image/images on one side or both sides of the document is read by an optical system so as to be read by a CCD (Charge Coupled Device) 111. Note that images are not limited to image data, such as figures and pictures, but include text data, such as letters and symbols. The operation display section 12 includes an LCD (Liquid Crystal Display) 121, a touch panel disposed to cover the LCD 121, various switches and buttons, a numeric keypad, and an operation key set. The operation display section 12 receives instructions from a user, and outputs operation signals corresponding to the instructions to a control section 150 (shown in FIG. 2). Furthermore, the operation display section 12 displays: various setting screens for inputting various operation instructions and setting information; various processing results; and the like, in accordance with display signals inputted from the control section 150.

The printing section 13 performs electrophotographic image forming processing. The printing section 13 includes a paper feeding section 131, a paper carrying section 132, an image forming section 133 for a plurality of colors, and a fixing section 134, the sections which are related to printing-out.

The printing section 13 of the first embodiment employs an electrophotographic system. However, this is not a limit, and hence another printing system such as an inkjet system or a heat-used dye sublimation system may be employed.

The paper feeding section 131 includes a plurality of paper feeding trays. Each of the paper feeding trays includes a paper feeing unit including a paper feeding roller, a separation roller, a paper feeding/separation rubber, and a sending-out roller. Sheets of paper classified in advance based on the kinds of the paper (paper type, weight, size, and the like) are housed in the paper feeding trays. The sheets housed in each of the paper feeding trays are carried to the paper carrying section 132 one by one from the top by the paper carrying unit.

The paper carrying section 132 carries paper, which is carried from the paper feeding section 131, onto the paper carry path toward the image forming section 133, the paper carry path on which a plurality of intermediate rollers, a resist roller, and the like are provided, so as to carry the paper to a secondary transfer position of the image forming section 133. The paper is once stopped on the upstream side of the resist roller and then carried to the downstream side of the resist roller, in accordance with writing timing of the image forming section 133.

The image forming section 133 includes, for each color, a photosensitive drum, a charger, an exposure device, a developing device, a primary transfer roller, and a cleaner, and generates output materials on which images are formed based on print image data. The image forming apparatus 10 of the embodiment is an image forming apparatus which forms color images, and hence the image forming section 133 is provided for a plurality of colors. That is, the image forming section 133 includes image forming sections 133y, 133m, 133c and 133k. However, this is not a limit, and hence the image forming apparatus 10 may be an image forming apparatus which forms monochrome images.

In the image forming section 133y which forms yellow (Y) toner images, the surface of the photosensitive drum, the surface being charged by the charger, is exposed to light for print image data of yellow (Y) emitted from the exposure device, so that an electrostatic latent image is written thereon. Then, with the developing device, charged yellow toners adhere onto the surface of the photosensitive drum, the surface on which the electrostatic latent image is written, so that the electrostatic latent image is developed. By the photosensitive drum rotating at a certain speed, the toners adhering, with the developing device, onto the photosensitive drum are transferred to an intermediate transfer belt 133a at a primary transfer position at which the primary transfer roller is disposed. After the toners are transferred to the intermediate transfer belt 133a, the residual charges, the residual toners, and the like on the surface of the photosensitive drum are removed by the cleaner. The removed toners and the like are collected into a toner collection box.

Similarly, each of the image forming sections 133m, 133c, and 133k includes the photosensitive drum, and also the charger, the exposure device, the developing device, the primary transfer roller, and the cleaner, which are disposed around the photosensitive drum. The image forming sections 133m, 133c, and 133k form magenta (M) toner images, cyan (C) toner images, and black (K) toner images, respectively.

Toner images of the colors transferred onto the intermediate transfer belt 133a are transferred onto paper in a lump at the secondary transfer position at which a secondary transfer roller is disposed.

The fixing section 134 includes a fixing heater and a fixing roller, and fixes the toner images transferred onto the paper by heat (fixing processing).

The paper on which the fixing processing is performed is carried to the output image reading apparatus 20 by a paper ejection roller and the like.

The output image reading apparatus 20 includes an image sensor 211 (shown in FIG. 2) provided on the paper carry path.

When paper on which an image is formed (output material) is carried from the image forming apparatus 10, the output image reading apparatus 20 reads, with the image sensor 211, the image (output image) formed on the output material, to generate output image data of the output material.

The output image reading apparatus 20 may have a function to synchronize a speed at which paper is carried from the image forming apparatus 10 to the output image reading apparatus 20 with a speed at which paper is carried from the output image reading apparatus 20 to the finishing apparatus 30.

The finishing apparatus 30 includes a paper ejection tray and a finishing section 311 having various finishing units such as a reversing unit, a sorting unit, a stapling unit, a punching unit, a folding unit, and a binding unit. The finishing apparatus 30 performs various types of finishing on paper carried thereto in accordance with instructions from the image forming apparatus 10, and ejects the paper on which the finishing is performed to the paper ejection tray.

FIG. 2 is a control block diagram of the image forming system 1 according to the first embodiment.

As shown in FIG. 2, the image forming system 1 includes the image forming apparatus 10, the output image reading apparatus 20, and the finishing apparatus 30.

The image forming apparatus 10 includes the image reading section 11, the operation display section 12, the printing section 13, a controller 14, and an image control substrate 15. The image forming apparatus 10 is connected with an external apparatus 2 on a network 3 via a LANIF (Local Area Network InterFace) 144 of the controller 14 so as to transfer/receive data to/from the external apparatus 2.

The image reading section 11 includes an image reading control section 110 in addition to the above-described auto document sending section and reading section. The image reading control section 110 controls the auto document sending section, the reading section, and the like based on instructions from the control section 150 so as to realize a scan function to read images of a plurality of documents as image data of analog signals. The image data of analog signals read by the image reading section 11 are outputted to a reading processing section 153. The reading processing section 153 performs A/D conversion on the image data of analog signals, and performs various types of image processing on the converted image data.

The operation display section 12 includes an operation display control section 120 in addition to the above-described LCD 121, touch panel, and the like. The operation display control section 120 displays: the various screens for inputting various setting conditions; various processing results; and the like, on the LCD 121, in accordance with display signals inputted from the control section 150. The operation display control section 120 outputs operation signals inputted from the various switches and buttons, the numeric keypad, the operation key set, the touch panel, and the like, to the control section 150.

Furthermore, the operation display section 12 displays a comparison condition setting screen (described below) on the LCD 121, and realizes a function as an input section which receives instructions on comparison condition setting information (described below) to compare output image data with comparison image data.

The printing section 13 includes a printing control section 130 in addition to the above-described paper feeding section 131, paper carrying section 132, image forming section 133, and fixing section 134, the sections which are related to printing-out. The printing control section 130 controls operations of the sections and the like of the printing section 13, such as the image forming section 133, in accordance with instructions from the control section 150 to perform image formation based on the print image data inputted from a writing processing section 159.

The controller 14 manages and controls data inputted into the image forming system 1 from the external apparatus 2 or the like connected to the network 3. The controller 14 receives data for printing (print data and print setting data), and transmits the print setting data and image data generated by expanding the print data to the image control substrate 15.

The controller 14 includes a controller control section 141, a DRAM (Dynamic Random Access Memory) control IC 142, an image memory 143, and a LANIF 144.

The controller control section 141 controls operations of the sections and the like of the controller 14 as a whole, and generates image data in a bitmap format by expanding the print data inputted from the external apparatus 2 via the LANIF" 144.

The DRAM control IC 142 controls transfer of the print data received by the LANIF 144 to the controller control section 141 and writing/reading of the image data and the print setting data into/from the image memory 143. The DRAM control IC 142 is connected with a DRAM control IC 155 of the image control substrate 15 by a PCT (Peripheral Components Interconnect) bus, and reads the image data subjected to printing-out and the print setting data from the image memory 143, and outputs the data to the DRAM control IC 155, in accordance with instructions from the controller control section 141.

The image memory 143 is constituted of a volatile memory such as a DRAM, and temporarily stores the received print data and print setting data, the generated image data, and the like.

The LANIF 144 is a communication interface, such as an NIC (Network Interface Card) or a modem, for connecting to the network 3 such as a LAN, and receives the print data and the print setting data from the external apparatus 2. The received print data and print setting data are outputted to the DRAM control IC 142.

The image control substrate 15 includes the control section 150, a nonvolatile memory 151, a RAM (Random Access Memory) 152, the reading processing section 153, a compression IC 154, the DRAM control IC 155, a storage section 156, an image memory 157, an extension IC 158, and the writing processing section 159.

The control section 150 is constituted of a CPU (Central Processing Unit) or the like. The control section 150 reads a system program and a specific program of various application programs from the nonvolatile memory 151, loads the programs to the RAM 152, and performs processing in cooperation with the programs loaded to the RAM 152, thereby performing centralized control of the sections and the like of the image forming apparatus 10.

Furthermore, the control section 15 performs output image abnormality detection processing based on an output image abnormality detection processing program of the first embodiment read from the nonvolatile memory 151, data for the program, and other various data.

The output image abnormality detection processing is performed when, based on job data in which a number of copies to be printed out is set, the number being more than one (a plural-copy-execution number), images are formed on paper, and a plurality of output materials is printed out (printing-out).

In the output image abnormality detection processing of the first embodiment, when the printing-out for the first copy is performed, conformation printing-out is performed, whereby the output image reading apparatus 20 reads output images formed on one output material (first output material) to generate output image data of the one output material, and stores the output image data as comparison image data in the storage section 156.

The confirmation printing-out is printing-out of one output material for confirming images formed thereon based on the job data.

In the output image abnormality detection processing, when the printing-out for the second copy (or each of the remaining copies) is performed, the output image data of the second output material generated by the output image reading apparatus 20 is compared with the comparison image data stored in the storage section 156, based on the comparison condition setting information on a pixel-to-pixel basis in terms of density values, and whether the output image data is identical with the comparison image data or not is judged. When it is judged that the output image data is not identical with the comparison image data, the operation related to the printing-out based on the job data in execution is suspended.

Thus, the control section 150 realizes a function as a comparison section and an operation control section.

The job data includes job information and page information.

The job information is information common to all pages. For example, the job information includes the set number of copies, an output mode (single-sided/double-sided), an output tray, an application function, a color mode, and a paper type. A piece of the page information is correlated with compressed image data of a page. The page information is information on the correlated compressed image data. For example, the page information includes a page number, an image size (length and width), an image direction, an image width, an image rotation angle, an image formation side (front/back) and a storage address.

The nonvolatile memory 151 stores various processing programs related to image formation and various data, and also stores the output image abnormality detection processing program of the first embodiment, data processed by the programs, and the like.

The RAM 152 forms a work area which temporarily stores various programs executed by the control section 150, various data for the programs, and the like. Furthermore, the RAM 152 temporarily stores job data which is generated by the control section 150 based on the image data and the print setting data inputted from the controller 14, or based on the image data inputted from the image reading section 11 and the setting information set by the operation display section 12 when the image data is obtained.

The reading processing section 153 performs various types of processing such as analog processing, A/D conversion, and shading on the image data of analog signals inputted from the CCD 111 of the image reading section 11 or the image sensor 211 of the output image reading apparatus 20, and then generates image data of digital signals.

The compression IC 154 compresses the inputted image data of digital signals.

The DRAM control IC 155 controls the compression on the image data performed by the compression IC 154 and extension on the compressed image data performed by the extension IC 158, and also controls input/output of the image data into/from the storage section 156 and the image memory 157, in accordance with instructions from the control section 150.

For example, when a keeping instruction to keep output image data read by the image sensor 211 of the output image reading apparatus 20 is inputted from the control section 150, the DRAM control IC 155 keeps the output image data, which is inputted in the reading processing section 153, in the storage section 156. Furthermore, when an instruction to determine the output image data kept in the storage section 156 as the comparison image data is inputted from the control section 150, the DRAM control IC 155 stores the kept output image data in the storage section 156 as the comparison image data.

Furthermore, when a keeping instruction to keep image data read by the image reading section 11 is inputted from the control section 150, the DRAM control IC 155 allows the compression IC 154 to compress the image data inputted in the reading processing section 153, and stores the compressed image data into a compression memory 157a of the image memory 157. Furthermore, when image data is inputted from the DRAM control IC 142 of the controller 14, the DRAM control IC 155 allows the compression IC 154 to compress the image data, and stores the compressed image data into the compression memory 157a of the image memory 157.

Furthermore, when a printing-out instruction on the compressed image data stored in the compression memory 157a is inputted from the control section 150, the DRAM control IC 155 reads the compressed image data from the compression memory 157a, allows the extension IC 158 to extend the compressed image data, and stores the extended image data into a page memory 157b of the image memory 157. Furthermore, when a printing-out instruction on the image data stored in the page memory 157b is inputted, the DRAM control IC 155 reads the image data from the page memory 157b, and outputs the read image data to the writing processing section 159.

The storage section 156 is constituted of an HDD or the like, and stores the comparison condition setting information, comparison image data, output image data, and the like.

The image memory 157 is constituted of a DRAM (Dynamic RAM), and includes the compression memory 157a and the page memory 157b. The compression memory 157a stores compressed image data. The page memory 157b temporarily stores image data subj ected to printing- out, and temporarily stores data received from the controller 14 before the received data is compressed.

The extension IC 158 extends compressed image data.

The writing processing section 159 generates print image data for image formation based on the image data inputted from the DRAM control IC 155, and outputs the generated print image data to the printing section 13.

The output image reading apparatus 20 includes an output image reading control section 210 and the image sensor 211. The image sensor 211 is controlled by the output image reading control section 210. The output image reading control section 210 controls the image sensor 211 so that the image sensor 211 reads output images formed on output materials which are carried from the image forming apparatus 10, generates output image data thereof, and transmits the output image data to the reading processing section 153 of the image forming apparatus 10, in accordance with a start instruction to start the output image reading processing inputted from the control section 150 via the printing control section 130.

The finishing apparatus 30 includes the finishing section 311 having various finishing units described above, a carrying section including a carry roller to carry paper to each of the finishing units of the finishing section 311, and the paper ejection tray onto which the paper carried from each of the finishing units of the finishing section 311 is ejected. The finishing units of the finishing section 311 are controlled by a finishing control section 310 as a whole. The finishing control section 310 makes paper carried to a predetermined finishing unit of the finishing section 311 along the paper carry path, and controls drive of the predetermined finishing unit so that the finishing unit performs predetermined finishing on the paper, and the paper is ejected onto the paper ejection tray, in accordance with an instruction signal on the finishing inputted from the control section 150 via the printing control section 130.

Next, operations of the image forming system 1 according to the first embodiment are described.

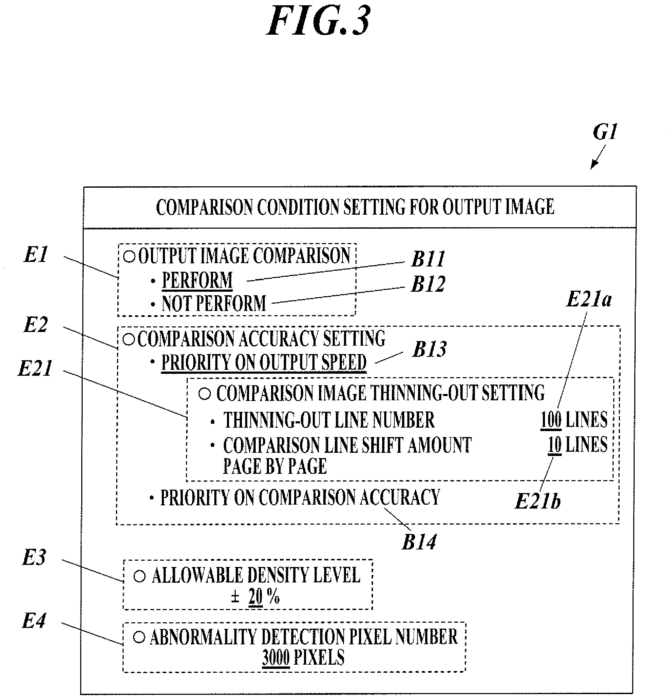

FIG. 3 shows an example of the comparison condition setting screen which receives the setting of the comparison condition setting information used in the output image abnormality detection processing of the first embodiment. The comparison condition setting screen is displayed before the output image abnormality detection processing is performed.

As shown in FIG. 3, a comparison condition setting screen G1 includes an output image comparison setting region E1, a comparison accuracy setting region E2, an allowable density level setting region E3, and an abnormality detection pixel number setting region E4.

The output image comparison setting region E1 is a region to receive a selection instruction to perform the output image abnormality detection processing or a selection instruction not to perform the output image abnormality detection processing, and includes a performance button B11 and a no-performance button B12. When the performance button B11 is selected, the output image abnormality detection processing becomes effective at the time when the printing-out based on the job data in which the plural-copy-execution number is set is performed. When the no-performance button B12 is selected, the output image abnormality detection processing becomes ineffective.

The comparison accuracy setting region E2 is a region to receive, as the comparison condition setting information, a selection instruction on a mode in which priority is given to the output speed of the output material (output speed mode) or a selection instruction on a mode in which priority is given to the accuracy of the comparison (comparison accuracy mode), and includes an output speed button B13 and a comparison accuracy button B14.

When the output speed button B13 is selected, the output speed mode is set, and a comparison image thinning-out setting region E21 becomes in a state in which selection instructions are receivable.

When the output speed mode is set, if the comparison between the output image and the comparison image (comparison processing) takes longer than a predetermined value of time owing to the amounts of data to be compared or the reading accuracy of the image sensor 211 of the output image reading apparatus 20, the control section 150 reduces the amounts of data to be compared per page in accordance with a thinning-out line number and a comparison line shift amount, so that the time taken by the comparison processing is shortened, and the output speed of the output material is secured not to be equal to or less than a predetermined speed.

The comparison image thinning-out setting region E21 includes a thinning-out line number setting region E21a and a comparison line shift amount setting region E21b.

The thinning-out line number setting region E21a is a region to receive an instruction on the number of lines of data to be thinned out (thinning-out line number) from the data to be compared, namely, from each of the output image data and the comparison image data, when the output image data is compared with the comparison image data.

The comparison line shift amount setting region E21b is a region to receive an instruction on a shift amount to shift the position of the data of the thinning-out line number (comparison line shift amount) page by page in a sub-scanning direction (paper carry direction).

When the comparison accuracy button B14 is selected, the comparison accuracy mode is set. When the comparison accuracy mode is set, all the output image data is compared with all the comparison image data on a pixel-to-pixel basis. If the comparison processing takes longer than a predetermined value of time owing to the amounts of data to be compared or the reading accuracy of the image sensor 211 of the output image reading apparatus 20, paper feeding interval is set to be longer than a preset paper feeding interval.

The allowable density level setting region E3 is a region to receive, as the comparison condition setting information, an instruction on an allowable density range for pixels of the output image data to pixels of the comparison image data.

For example, by taking the density value of a pixel of the comparison image data as a reference, the density value of the pixel of the comparison image ± 20% is set as the allowable density range for the density value of its corresponding pixel of the output image data.

The abnormality detection pixel number setting region E4 is a region to receive, as the comparison condition setting information, a setting instruction on an abnormality detection pixel number used as a judgment standard to judge whether or not the output image data is identical with the comparison image data. For example, when the number of pixels, the density values of which are out of the allowable density range is equal to or more than the abnormality detection pixel number (3000 pixels, for example), it is judged that the output image data is not identical with the comparison image data, thereby being judged that there is abnormality in the output image of the output image data.

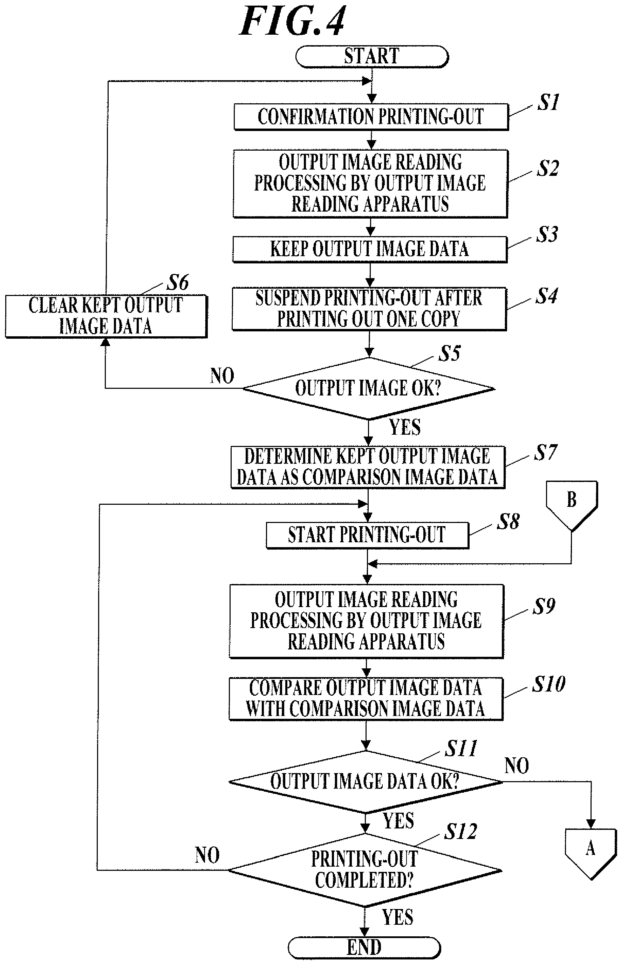

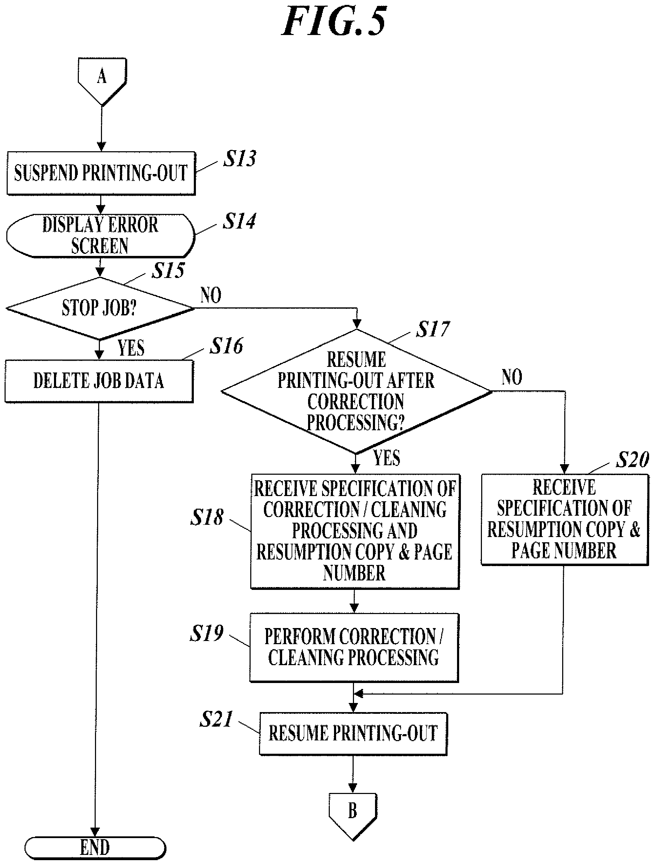

FIGS. 4 and 5 show a flowchart of the output image abnormality detection processing according to the first embodiment.

The output image abnormality detection processing shown in FIGS. 4 and 5 is performed by the control section 150 of the image forming apparatus 10 in cooperation with other sections and the like.

When starting to perform printing-out based on job data in which a plural-copy-execution number is set, the control section 150 starts to perform printing-out for the first copy as the confirmation printing-out (Step S1). The control section 150 gives the output image reading apparatus 20 a notice of a start instruction to start reading processing of output images (output image reading processing) formed on the first output material page by page, and allows the output image reading apparatus 20 to perform the output image reading processing (Step S2).

In accordance with the notice from the control section 150, the output image reading apparatus 20 starts the output image reading processing on the first output material, generates output image thereof data page by page, and outputs the output image data of one output material (first output material) to the reading processing section 153.

The control section 150 allows the reading processing section 153 to perform various types of processing on the output image data inputted thereto, and keeps the processed output image data in the storage section 156 (Step S3). When the printing-out for the first copy is completed, the control section 150 suspends the operation related to the printing-out based on the job data (output operation in the image forming system 1) (Step 4).

A user makes a visual examination of the images formed on the first output material ejected to the paper ejection tray so as to check whether or not there is no stain, there is no misregistration, colors are properly expressed, and the like. Then, the user inputs an image confirmation result which indicates that the images formed on the output material are proper (output image OK; there is no wastepaper), or that the images formed on the output material are not proper, from the operation display section 12.

The control section 150 judges whether or not the indication that the output images are OK is inputted from the operation display section 12 (Step S5).

When the indication that the output images are OK is not inputted, namely, an indication that there is an output image poorly formed on the output material (i.e. there is wastepaper) is inputted (Step S5; NO), the control section 150 clears the output image data of the first output material kept in the storage section 156 (Step S6), and returns to Step S1 to perform the printing-out for the first copy again.

When the indication that the output images are OK is inputted (Step S5; YES), the control section 150 determines the output image data kept in the storage section 156 as the comparison image data, and stores the output image data into the storage section 156 as the comparison image data (Step S7).

The control section 150 performs the confirmation printing-out by taking Steps S1 to S7 as described above, and when the indication that the image confirmation result obtained by the confirmation printing-out is positive (output image OK) is inputted, stores the output image data of the one output material (first output material) obtained by the confirmation printing-out in the storage section 156 as the comparison image data. Thus, the control section 150 realizes a function as a comparison image data setting section.

The control section 150 starts to perform the printing-out for the second copy (or each of the remaining copies) (Step S8), and allows the output image reading apparatus 20 to perform the reading processing on the images (output image reading processing) formed on the second output material page by page (Step S9).

In accordance with an instruction from the control section 150, the output image reading apparatus 20 starts the output image reading processing page by page, and generates output image data page by page to output the generated output image data to the reading processing section 153.

The control section 150 allows the reading processing section 153 to perform various types of processing on the output image data inputted thereto. The control section 150 compares the processed output image data with the comparison image data page by page (comparison processing) (Step S10).

At Step S10, the control section 150 judges which of the output speed mode and the comparison accuracy mode is set based on the comparison condition setting information. When the output speed mode is set, the control section 150 thins out the amounts of data to be compared from the output image data and the comparison image data page by page based on the thinning-out line number and the comparison line shift amount, so as to reduce the amounts of data to be compared per page therefrom. Then, the control section 150 compares the output image data with the comparison image data on a pixel-to-pixel basis in terms of density values, judges whether or not the density values of the pixels of the output image data are within the allowable density range, and counts the pixels of the output image data, the pixels, the density values of which are out of the allowable density range. When the number of the pixels thereof having the density values which are out of the allowable density range is equal to or more than the abnormality detection pixel number, the control section 150 judges that the output image data is not identical with the comparison image data, and thereby judging that there is abnormality in the output image.

The control section 150 judges whether or not the result of the comparison processing at Step S10 indicates that the output image data is identical with the comparison image data, and accordingly there is no abnormality in an output image (output image data OK) (Step S11).

When the result indicates that the output image data is OK (Step S11; YES), the control section 150 judges whether or not the printing-out based on the job data is completed (Step S12). When judging that the printing-out based thereon is not completed (Step S12; NO), the control section 150 returns to Step S8. On the other hand, when judging that the printing-out based thereon is completed (Step S12; YES), the control section 150 ends the output image abnormality detection processing. That is, Steps S8 to S12 are performed page by page.

When the result does not indicate that the output image data is OK, namely, the output image data is not identical with the comparison image data, and accordingly there is abnormality in the output image (Step S11; NO), the control section 150 suspends the operation related to the printing-out based on the job data (output operation in the image forming system 1) (Step S13), and displays an error screen on the LCD 121 of the operation display section 12 (Step S14).

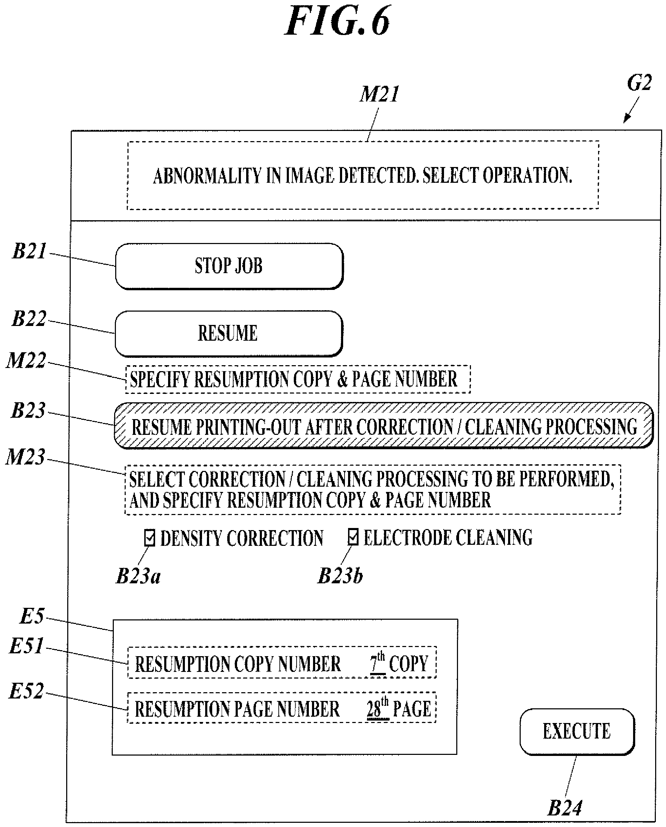

FIG. 6 shows an example of the error screen displayed at Step S14.

As shown in FIG. 6, a message M21 is displayed on an error screen G2. The message M21 informs presence of abnormality in an output image. An example of the message M21 is "Abnormality in Image Detected. Select Operation.", as shown in FIG. 6. On the error screen G2, a job stop button B21, a resumption button B22, an after-correction resumption button B23, a resumption copy number and page number setting region E5, an execution button B24, and the like are disposed, and one of the job stop button B21, the resumption button B22, and the after-correction resumption button B23 is selected.

Thus, the operation display section 12, which displays the error screen G2, realizes a function as a display section. The display section displays instruction information to the suspended operation related to the printing-out based on the job data in such a way that the instruction information is selectable.

The job stop button B21 deletes the job data of a suspended job, and receives job stop information to stop the printing-out which is performed based on the job data.

The resumption button B22 receives second resumption information to resume the printing-out based on the suspended job from the copy number and the page number set in the resumption copy number and page number setting region E5. In the vicinity of the resumption button B22, a message M22 is displayed. The message M22 requests a user to specify the copy number and the page number, from which the printing-out resumes, in the resumption copy number and page number setting region E5.

The after-correction resumption button B23 receives first resumption information to resume the printing-out based on the suspended job data from the copy number and the page number set in the resumption copy number and page number setting region E5, after selected correction processing and/or cleaning processing is performed. In the vicinity of the after-correction resumption button B23, a message M23 is displayed. The message M23 requests a user to specify a type of correction processing and/or a type of cleaning processing performed in the image forming apparatus 10, and to specify the copy number and the page number, from which the printing-out resumes, in the resumption copy number and page number setting region E5.

Furthermore, in the vicinity of the after-correction resumption button B23, processing selection buttons B23a and B23b are disposed. The processing selection buttons B23a and B23b receive selection instructions on the correction processing and the cleaning processing, the types of which can be automatically performed without user's operation.

The correction processing performed in the image forming apparatus 10 is, for example, correction of the sections or the like in the image forming apparatus 10, such as density correction. The cleaning processing is, for example, cleaning processing of the sections or the like in the image forming apparatus 10, such as electrode cleaning. The electrode is for charging the photosensitive drum.

The resumption copy number and page number setting region E5 includes, as a resumption section, a resumption copy number setting region E51 and a resumption page number setting region E52. The resumption section receives instructions on the copy number and the page number from which the printing-out based on the suspended job data resumes, when the resumption button B22 or the after-correction resumption button B23 is selected. The resumption copy number setting region E51 receives the instruction on the copy number from which the printing-out resumes. The resumption page number setting region E52 receives the instruction on the page number from which the printing-out resumes.

The control section 150 judges whether or not the job stop button B21 is selected on the error screen G2 (Step S15).

When the job stop button B21 is selected (Step S15; YES) and the execution, button B24 is pressed, the control section 150 deletes the job data in execution (Step S16), and ends the output image abnormality detection processing.

When the job stop button B21 is not selected (Step S15; NO), the control section 150 judges whether or not the after-correction resumption button B23 is selected (Step S17).

When the after-correction resumption button B23 is selected (Step S17; YES), the control section 150 makes the processing selection buttons B23a and B23b selectable, and receives a selection instruction on the correction processing and/or a selection instruction on the cleaning processing. In addition, the control section 150 makes setting in the resumption copy number and page number setting region E5 available, and receives instructions on the copy number and the page number from which the printing-out resumes (Step S18). When the execution button B24 is pressed after Step S18, the control section 150 performs the selected correction processing and/or cleaning processing (Step S19).

When the after-correction resumption button B23 is not selected but the resumption button B22 is selected (Step S17; NO), the control section 150 makes setting in the resumption copy number and page number setting region E5 available, and receives instructions on the copy number and the page number from which the printing-out resumes (Step S20).

When the execution button B24 is pressed after Step S19 or after Step S20, the control section 150 resumes the printing-out from the copy number and the page number set in the resumption copy number and page number setting region E5 (Step S21), and moves to Step S9.

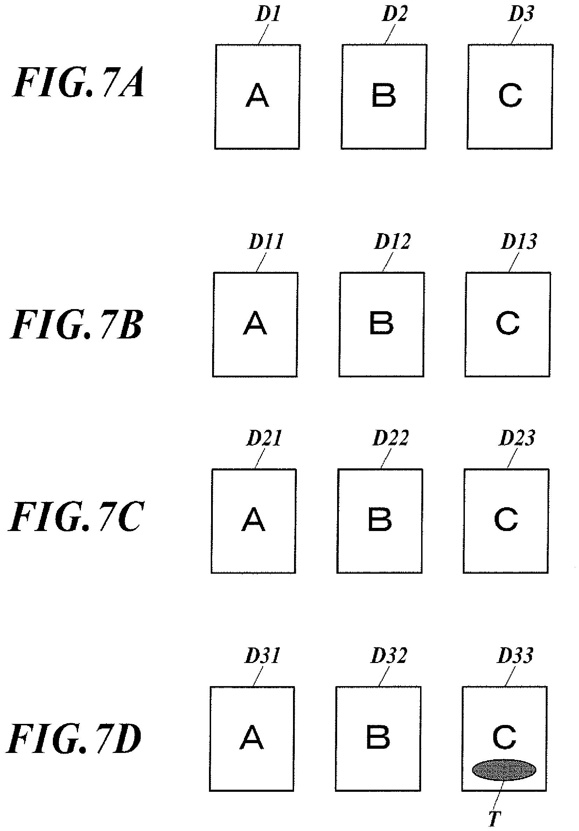

FIGS. 7A to 7D show images in the output image abnormality detection processing according to the first embodiment.

FIG. 7A is an image view showing image data of each page of job data composed of three pages per copy and the set number of copies (plural-copy-execution number) is four. In FIG. 7A, the image data of the first page is represented by D1, the image data of the second page is represented by D2, and the image data of the third page is represented by D3.

When the printing-out is performed based on the job data shown in FIG. 7A, the output image abnormality detection processing is performed. FIG. 7B is an image view showing output image data of each page of the first output material ejected when the printing-out for the first copy (confirmation printing-out) is performed. In FIG. 7B, the output image data of the first page of the first output material is represented by D11, the output image data of the second page thereof is represented by D12, and the output image data of the third page thereof is represented by D13.

When a user judges that the images formed on the first output material are proper (output image OK), the output image data D11, D12 and D13 of the images formed on the first output material are stored as the comparison image data in the storage section 156, and the printing-out for the second copy is performed.

FIG. 7C is an image view showing output image data of each page of the second output material read when the printing-out for the second copy is performed. In FIG. 7C, the output image data of the first page of the second output material is represented by D21, the output image data of the second page thereof is represented by D22, and the output image data of the third page thereof is represented by D23.

The output image data of the second output material is compared with the comparison image data page by page from the first page. As a result, it is judged that the output image data is OK with respect to all the pages, and the printing-out for the third copy is performed. (Refer to FIGS. 7B and 7C.)

FIG. 7D is an image view showing output image data of each page of the third output material read when the printing-out for the third copy is performed. In FIG. 7D, the output image data of the first page of the third output material is represented by D31, the output image data of the second page thereof is represented by D32, and the output image data of the third page thereof is represented by D33. A toner stain appears on the third page of the third output material. Consequently, image data T based on an image influenced by the toner stain is included in the output image data of the third page thereof.

The output image data of the third output material is compared with the comparison image data page by page from the first page. When the output image data of the third page is compared with the comparison image data of the third page, it is judged that the output image data of the third page is not identical with the comparison image data of the third page because the toner stain appears on the third page of the third output material, thereby being judged that there is abnormality in the output image. Consequently, the next page (the first page of the fourth output material) is not printed out, and the output operation in the image forming system 1 stops.

Thereafter, in accordance with the instruction information received by the error screen G2, operations for job stop, job resumption, and the like are performed.

As described above, according to the first embodiment, output image data can be obtained by reading images formed on paper, and the obtained output image data can be used as the comparison image data which acts as a judgment standard of wastepaper. Accordingly, image processing to extract image data for the comparison and the like becomes unnecessary, and wastepaper can be detected regardless of paper type. Furthermore, according to the first embodiment, whether it is wastepaper or not can be judged based on the output image data of the whole images formed on paper based on the job data, unlike a conventional way in which whether it is wastepaper or not is judged based on a portion of image data. Accordingly, the detection accuracy of paper judged that images are poorly formed thereon (wastepaper) can be increased.

Furthermore, when the indication that the image confirmation result is positive (output image OK) is inputted, the output image data of the printed-out one output material can be stored in the storage section as the comparison image data. Accordingly, the output image data of the output material which is judged to be proper by a user can be used as the comparison image data for detecting wastepaper, and hence the detection accuracy of wastepaper can be increased.

Furthermore, whether the output image data is identical with the comparison image data or not can be judged based on the comparison condition setting information.

When the selection instruction to select the output speed mode is received as the comparison condition setting information, each of the comparison image data and the output image data is thinned out in accordance with the thinning-out line number. Accordingly, the comparison image data and the output image data can be compared with each other after the data amounts to be compared are reduced, and hence, as the output speed, a certain speed can be secured. In particular, because the comparison image data and the output image data can be compared with each other after the data amounts to be compared are reduced by shifting the position of the thinning-out line number page by page in accordance with the comparison line shift amount, the comparison can be performed on the whole image formation region of paper by printing out a plurality of pages.

When the selection instruction to select the comparison accuracy mode is received as the comparison condition setting information, all the comparison image data and all the output image data are compared with each other. Accordingly, the comparison accuracy can be increased.

Furthermore, whether the output image data is identical with the comparison image data or not can be judged based on the comparison result. The comparison result is obtained by comparing the output image data with the comparison image data on a pixel-to-pixel basis in terms of density values, and judging whether the density value of each pixel of the output image data is within the allowable density range or not. When the number of pixels having the density values which are out of the allowable density range is equal to or more than the abnormality detection pixel number, it can be judged that the output image data is not identical with the comparison image data.

Furthermore, when it is judged that the output image data is not identical with the comparison image data, and accordingly there is abnormality in the output image of the output image data, the operation related to the printing-out is suspended, and the error screen is displayed, whereby the instruction information (job stop, after-correction resumption, and resumption, for example) to the suspended operation based on the job data can be displayed to be selectable.

When the after-correction resumption button or the resumption button is selected, the instructions on the copy number and the page number from which the printing-out based on the suspended job data resumes can be received. Accordingly, the printing-out can be resumed from the copy number and the page number which a user desires.

### [Second Embodiment]

In the following, a second embodiment of the present invention is described with reference to the drawings.

First, the configuration of an image forming system according to the second embodiment of the present invention is described.

The configuration of the image forming system of the second embodiment is similar to the image forming system of the first embodiment, and hence its figure and description thereof are omitted.

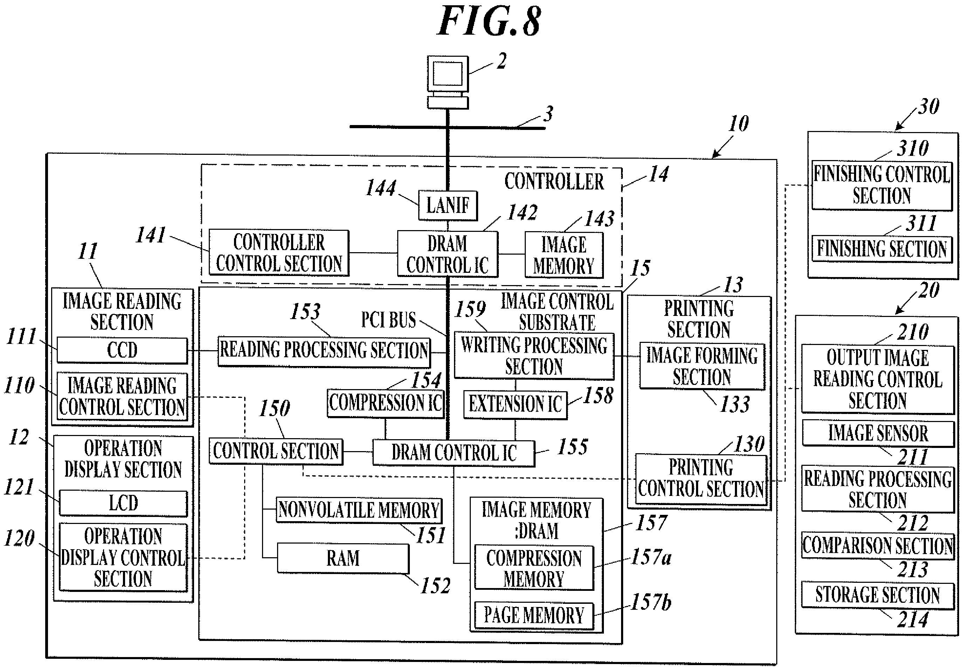

FIG. 8 is a control block diagram showing the image forming system 1 of the second embodiment.

As shown in FIG. 8, the image forming system 1 includes the image forming apparatus 10, the output image reading apparatus 20, and the finishing apparatus 30.

The sections and the like of the image forming system 1 of the second embodiment similar to those of the image forming system 1 of the first embodiment are denoted by the same numeral references and the description thereof is omitted, and only the sections and the like different therefrom are described.

The image control substrate 15 includes the control section 150, the nonvolatile memory 151, the RAM (Random Access Memory) 152, the reading processing section 153, the compression IC 154, the DRAM control IC 155, the image memory 157, the extension IC 158, and the writing processing section 159.

That is, the image control substrate 15 of the second embodiment is configured to be the same as the image control substrate 15 of the first embodiment except that the image control substrate 15 of the second embodiment does not have the storage section 156.

The control section 150 of the second embodiment performs the output image abnormality detection processing in cooperation with the output image reading control section 210 of the output image reading apparatus 20 based on an output image abnormality detection processing program of the second embodiment read from the nonvolatile memory 151, data for the program, and other various data.

The output image abnormality detection processing of the second embodiment is performed, like the first embodiment, when, based on job data in which a plural-copy-execution number is set, images are formed on paper, and a plurality of output materials is printed out.

In the output image abnormality detection processing, the control section 150 of the image forming apparatus 10 performs the confirmation printing-out when the printing-out for the first copy is performed. When the comparison image data is stored in the output image reading apparatus 20, the printing-out for the second copy (or each of the remaining copies) is performed. When receiving a notice of abnormality-in-image detection, the control section 150 thereof suspends the operation related to the printing-out based on the job data in execution. That is, the control section 150 of the second embodiment realizes a function as an operation control section.

The reading processing section 153 performs various types of processing such as analog processing, A/D conversion, and shading on the image data of analog signals inputted from the CCD 111 of the image reading section 11, and then generates image data of digital signals.

The DRAM control IC 155 controls the compression of image data performed by the compression IC 154 and the extension of the compressed image data performed by the extension IC 158, and also controls input/output of the image data into/from the image memory 157, in accordance with instructions from the control section 150.

Unlike the DRAM control IC 155 of the first embodiment, the DRAM control IC 155 of the second embodiment does not perform any processing on output image data because output image data is not inputted into the reading processing section 153.

The output image reading apparatus 20 includes the image sensor 211, a reading processing section 212, a comparison section 213, a storage section 214, and the output image reading control section 210. The sections and the like of the output image reading apparatus 20 are controlled by the output image reading control section 210 as a whole.

The reading processing section 212 performs various types of processing such as analog processing, A/D conversion, and shading on the image data of analog signals inputted from the image sensor 211, and then generates output image data of digital signals.

The comparison section 213 compares the generated output image data with the comparison image data stored in the storage section 214 based on the comparison condition setting information on a pixel-to-pixel basis in terms of density values, and judges whether the output image data is identical with the comparison image data or not.

The storage section 214 is constituted of an HDD or the like, and stores the comparison condition setting information, comparison image data, output image data, and the like.

The output image reading control section 210 performs the output image abnormality detection processing in cooperation with the control section 150 of the image forming apparatus 10 based the output image abnormality detection processing program of the second embodiment read from the storage section 214, data for the program, other various data, and various notices inputted from the control section 150 via the printing control section 130.

In the output image abnormality detection processing, the output image reading control section 210 stores and updates the comparison condition setting information notified from the control section 150 in the storage section 214.

Furthermore, in accordance with a notice of a start instruction on the output image abnormality detection processing, the notice which is inputted from the control section 150, the output image reading control section 210 allows the image sensor 211 to read output images formed on output materials carried from the image forming apparatus 10 to generate output image data, and allows the reading processing section 212 to perform various types of processing on the output image data. Thereafter, the output image reading control section 210 keeps the output image data in the storage section 214 or stores the output image data kept in the storage section 214 as the comparison image data therein.

Furthermore, when the second output material (or each of the output materials printed out thereafter) is carried into the output image reading control section 210, the output image reading control section 210 compares, with the comparison section 213, the output image data of the second output material (or each of the output materials printed out thereafter) with the comparison image data stored in the storage section 214 based on the comparison condition setting information on a pixel-to-pixel basis in terms of density values, and judges whether the output image data is identical with the comparison image data.

Next, operations of the image forming system 1 according to the second embodiment are described.

The comparison condition setting screen which receives the comparison condition setting information used in the output image abnormality detection processing of the second embodiment is the same as that of the first embodiment, and hence its figure and description thereof are omitted.

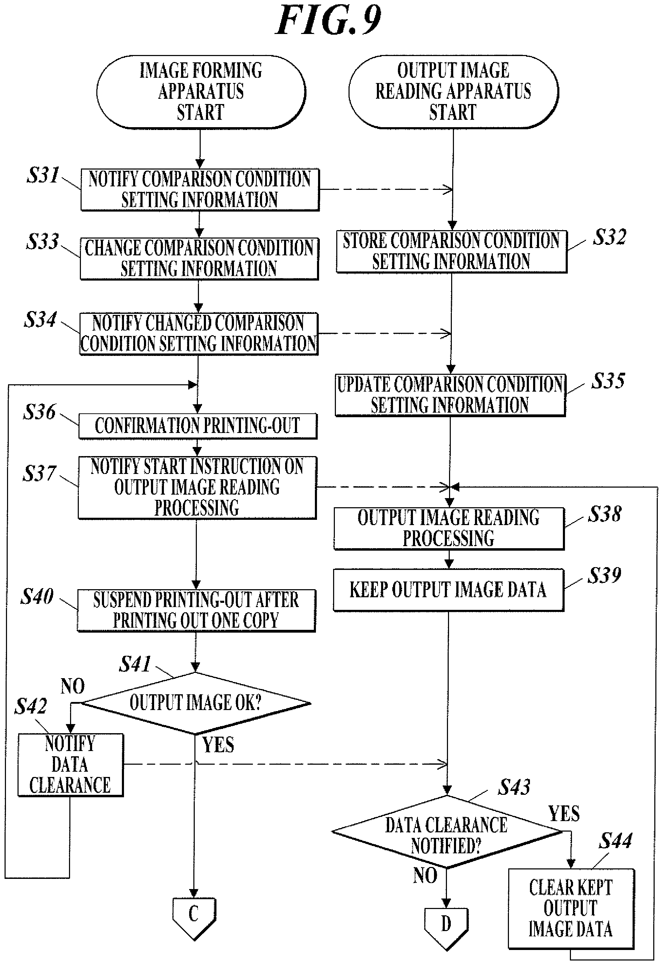

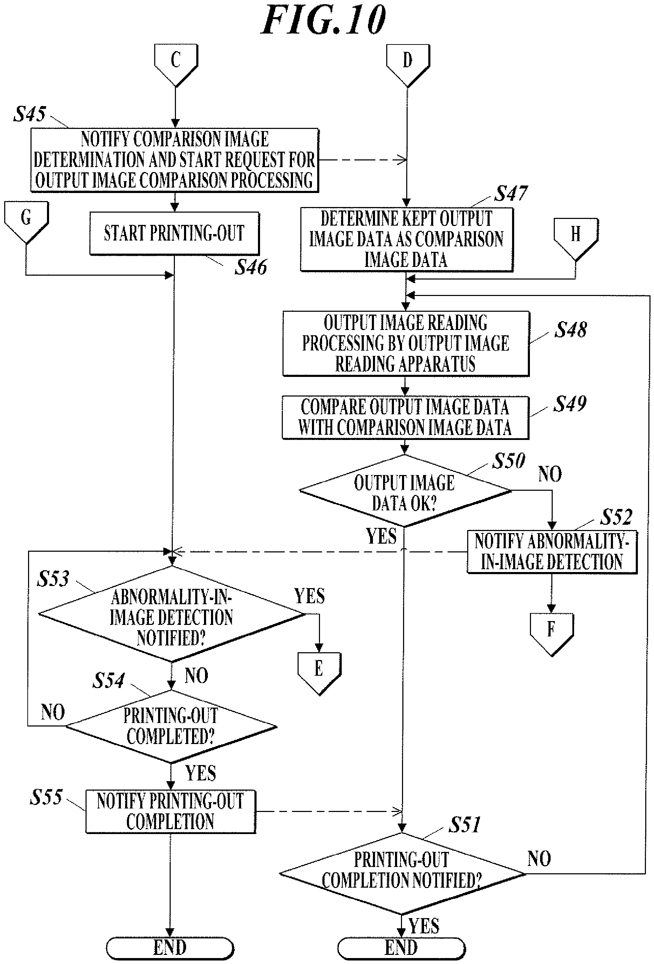

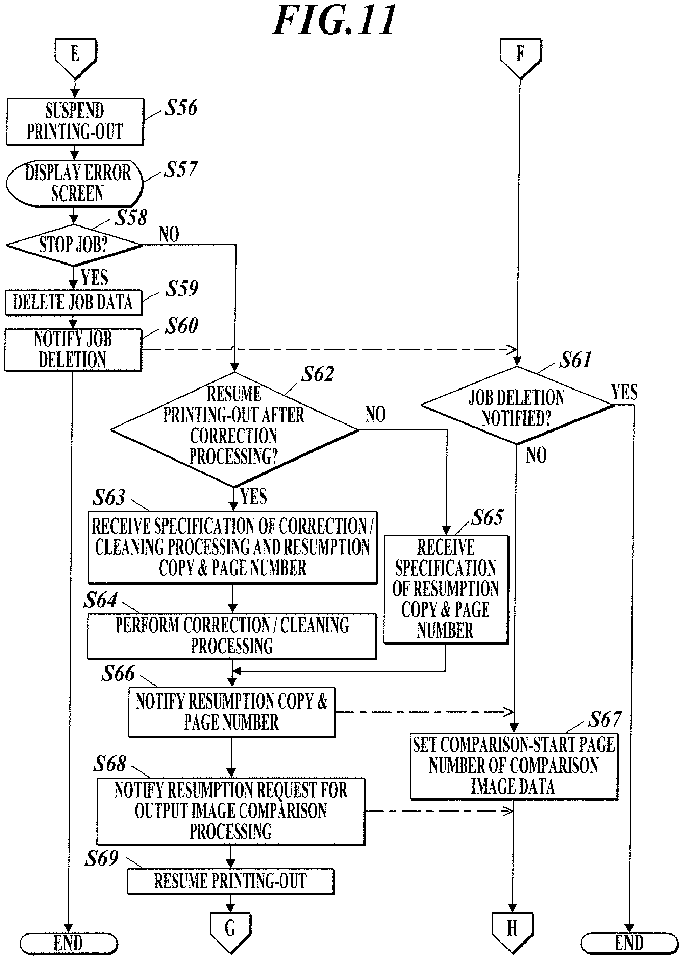

FIGS. 9 to 11 show a flowchart of the output image abnormality detection processing of the second embodiment.

The output image abnormality detection processing shown in FIGS. 9 to 11 is performed by the control section 150 of the image forming apparatus 10 in cooperation with the output image reading control section 210 of the output image reading apparatus 20.

The control section 150 gives the output image reading control section 210 a notice of the comparison condition setting information received by the comparison condition setting screen before starting to perform the printing-out based on the job data in which a plural-copy-execution number is set (Step S31). When receiving the notice of the comparison condition setting information from the control section 150, the output image reading control section 210 stores the comparison condition setting information in the storage section 214 (Step S32).

When receiving a change instruction on the comparison condition setting information with the comparison condition setting screen (Step S33), the control section 150 gives the output image reading control section 210 a notice of the changed comparison condition setting information (Step S34). When receiving the notice of the changed comparison condition setting information from the control section 150, the output image reading control section 210 stores the changed comparison condition setting information so as to update the comparison condition setting information stored therein (Step S35).

When starting to perform the printing-out based on the job data in which the plural-copy-execution number is set, the control section 150 starts the printing-out for the first copy as the confirmation printing-out (Step S36), and gives the output image reading control section 210 a notice of a start instruction on reading processing of output images (output image reading processing) formed on the first output material page by page (Step S37).

When receiving the notice of the start instruction on the output image reading processing from the control section 150, the output image reading control section 210 starts the output image reading processing on the first output material (Step S38), generates output image data page by page, and keeps the output image data of the first output material in the storage section 214 (Step S39).

When the printing-out for the first copy is completed, the control section 150 suspends the operation related to the printing-out based on the job data (output operation in the image forming system 1) (Step S40).

A user makes visual examination of the images formed on the one output material (first output material) ejected to the paper ejection tray to see whether or not there is no stain, there is no misregistration, colors are properly expressed, and the like, and inputs an image confirmation result which indicates that the images formed on the output material are proper (output image OK) (i.e. there is no wastepaper) or that the images formed on the output material are not proper, from the operation display section 12.

The control section 150 judges whether or not the indication that the output images are OK is inputted from the operation display section 12 (Step S41).

When the indication that the output images are OK is not inputted, namely, an indication that there is an output image poorly formed on the output material (i.e. there is wastepaper) is inputted (Step S41; NO), the control section 150 gives the output image reading control section 210 a notice of an instruction to clear the data (data clearance) (Step S42), and returns to Step S36 to perform the printing-out for the first copy again.

The output image reading control section 210 judges whether or not the notice of the data clearance is received (Step S43), and when the notice of the data clearance is received (Step S43; YES), the output image reading control section 210 clears the output image data of the first output material kept in the storage section 214 (Step S44), and returns to Step S38.

When the indication that the output images are OK is inputted (Step S41; YES), the control section 150 gives the output image reading control section 210 a notice of comparison image determination and a notice of a start request for the output image comparison processing (Step S45), and starts the printing-out for the second copy (or each of the remaining copies) (Step S46).

As shown in Steps S36, 37, 40, 41, 42 and 45, when the control section 150 performs the confirmation printing-out, and the indication that the image confirmation result obtained by the confirmation printing-out is positive is inputted, the control section 150 allows the storage section 214 to store the output image data of the one output material printed out by the confirmation printing-out as the comparison image therein. That is, the control section 150 realizes a function as a comparison image data setting section.

When not receiving the notice of the data clearance (Step S43; NO), but receiving the notice of the comparison image confirmation and the notice of the start request for the output image comparison processing, the output image reading control section 210 determines and stores the output image data kept in the storage section 214 as the comparison image data in the storage section 214 (Step S47). Then, the output image reading control section 210 starts the output image reading processing page by page, and generates output image data page by page (Step S48).

The output image reading control section 210 allows the comparison section 213 to compare the generated output image data with the comparison image data page by page (comparison processing) (Step S49). The comparison processing at Step S49 is the same as the comparison processing at Step S10 in the first embodiment, and hence the description thereof is omitted.

The output image reading control section 210 judges whether or not the result of the comparison processing (comparison result) at Step S49 indicates that the output image data is identical with the comparison image data, and accordingly there is no abnormality in an output image (output image data OK) (Step S50).

When the comparison result indicates that the output image data is OK (Step S50; YES), the output image reading control section 210 judges whether or not a notice of output completion (namely, a notice that the printing-out based on the job data is completed) is received (Step S51). When not receiving the notice of output completion (Step S51; NO), the output image reading control section 210 returns to Step S48. On the other hand, when receiving the notice of output completion (Step S51; YES), the output image reading control section 210 ends the output image abnormality detection processing.

When the comparison result does not indicate that the output image data is OK, namely, the output image data is not identical with the comparison image data, and accordingly there is abnormality in the output image (Step S50; NO), the output image reading control section 210 gives the control section 150 a notice that there is abnormality in the output image (notice of abnormality-in-image detection) (Step S52).

The control section 150 judges whether or not to receive the notice of abnormality-in-image detection (Step S53). When not receiving the notice of abnormality-in-image detection (Step S53; NO), the control section 150 judges whether or not the printing-out based on the job data is completed (Step S54).

When the printing-out based on the job data is not completed (Step S54; NO), the control section 150 returns to Step S53. When the printing-out based on the job data is completed (Step S54; YES), the control section 150 gives the output image reading control section 210 a notice of output completion (Step S55) and ends the output image abnormality detection processing.

When receiving the notice of abnormality-in-image detection (Step S53; YES), the control section 150 suspends the output operation in the image forming system 1 (Step S56), and displays an error screen on the LCD 121 of the operation display section 12 (Step S57).

The error screen displayed at Step S57 is the same as the error screen displayed at Step S14 in the first embodiment, and hence its figure and description thereof are omitted.

The control section 150 judges whether or not the job stop button B21 is selected on the error screen (Step S58).

When the job stop button B21 is selected (Step S58 ; YES), and the execution button B24 is pressed, the control section 150 deletes the job data in execution (Step S59), gives the output image reading control section 210 a notice of job deletion (Step S60), and ends the output image abnormality detection processing.

After Step S52, the output image reading control section 210 judges whether or not to receive the notice of job deletion (Step S61). When receiving the notice of job deletion (Step S61: YES), the output image reading control section 210 ends the output image abnormality detection processing.

When the job stop button B21 is not selected (Step S58; NO), the control section 150 takes Steps S62 to S65. Steps S62 to S65 in the second embodiment are the same as Steps S17 to S20 in the first embodiment, and hence the description thereof is omitted.

After Step S64 or Step S65, when the execution button B24 is pressed, the control section 150 gives the output image reading control section 210 a notice of the copy number and the page number set in the resumption copy number and page number setting region E5 (Step S66).

When receiving the notice of the copy number and the page number, the output image reading control section 210 sets the page number of the comparison image data at the page number indicated by the notice, the page number from which the comparison image data is referred to when the comparison processing between the comparison image data and the output image data starts (Step S67), and returns to Step S48.

The control section 150 gives the output image reading control section 210 a notice of a resumption request for the output image comparison processing (Step S68), resumes the printing-out from the copy number and the page number which are set in the resumption copy number and page number setting region E5 (Step S69), and returns to Step S53.

The output image abnormality detection processing in the second embodiment obtains a similar result to the result of the output image abnormality detection processing in the first embodiment, and hence its figure and description thereof are omitted.

As described above, in addition to the effects which can be obtained by the image forming system 1 in the first embodiment, according to the image forming system 1 in the second embodiment, loads for control can be divided between the image forming apparatus and the output image reading apparatus. This is because the output image abnormality detection processing is performed by the control section 150 and the output image reading control section 210 in cooperation with each other, it becomes unnecessary to use high-spec arithmetic unit (CPU or the like), and hence costs for an image forming system can be reduced.

In the embodiments of the present invention, a nonvolatile memory is used as a computer readable medium which stores the programs of the present invention. However, this is not a limit. For example, a nonvolatile memory such as a flash memory or a portable recording medium such as a CD-ROM can be used as the computer readable medium. Furthermore, a carrier wave can be used as a medium which provides the data of the programs of the present invention via a communication line.

The present invention is not limited to the embodiments, and hence can be appropriately modified without departing from the scope of the present invention.

According to an embodiment of the present invention, there is provided an image forming system including: an output image reading control section which reads an image formed on each of a plurality of output materials to generate output image data when the image is formed on paper and the plurality of output materials is obtained by printing-out based on job data in which a plural-copy-execution number is set; a storage section which stores output image data of an given output material generated by the output image reading control section as comparison image data; a comparison section which compares, with the comparison image data, output image data of another output material generated by the output image reading control section after the comparison image data is stored in the storage section, to judge whether or not the output image data is identical with the comparison image data; and an operation control section which suspends an operation related to the printing-out based on the job data when the comparison section judges that the output image data is not identical with the comparison image data.

Accordingly, output image data can be obtained by reading images formed on paper, and the obtained output image data can be used as the comparison image data which acts as a judgment standard of wastepaper. Accordingly, image processing to extract image data for the comparison and the like becomes unnecessary, and wastepaper can be detected regardless of paper type. Furthermore, whether it is wastepaper or not can be judged based on the output image data of the whole images formed on paper based on the job data, unlike a conventional way in which whether it is wastepaper or not is judged based on a portion of image data. Accordingly, the detection accuracy of paper judged that images are poorly formed thereon (wastepaper) can be increased.

Preferably, the image forming system further includes: a comparison image data setting section which performs confirmation printing-out to confirm the image formed based on the job data, the confirmation printing-out by which the given output material is obtained, and stores the output image data of the given output material as the comparison image data in the storage section when an indication that a positive image confirmation result is obtained by the confirmation printing-out is inputted.

Accordingly, when the indication that the image confirmation result is positive (output image OK) is inputted, the output image data of the printed-out one output material can be stored in the storage section as the comparison image data. Accordingly, the output image data of the output material which is judged to be proper by a user can be used as the comparison image data for detecting wastepaper, and hence the detection accuracy of wastepaper can be increased.

Preferably, the image forming system further includes: an input section which receives an instruction on comparison condition setting information to compare the output image data with the comparison image data, wherein the comparison section compares the output image data with the comparison image data to judge whether or not the output image data is identical with the comparison image data based on the comparison condition setting information.

Accordingly, whether the output image data is identical with the comparison image data or not can be judged based on the comparison condition setting information.

Preferably, in the image forming system, the input section receives, as the comparison condition setting information, a selection instruction on an output speed mode in which priority is given to an output speed of the output materials or a selection instruction on a comparison accuracy mode in which priority is given to comparison accuracy, the comparison section reduces a data amount of each of the output image data and the comparison image data to compare the output image data with the comparison image data when the selection instruction on the output speed mode is received by the input section, and the comparison section compares all the output image data with all the comparison image data when the selection instruction on the comparison accuracy mode is received by the input section.

When the selection instruction to select the output speed mode is received as the comparison condition setting information, the comparison image data and the output image data can be compared with each other after the data amounts to be compared are reduced, and hence, as the output speed, a certain speed can be secured.

Furthermore, when the selection instruction to select the comparison accuracy mode is received as the comparison condition setting information, all the comparison image data and all the output image data are compared with each other. Accordingly, the comparison accuracy can be increased.

Preferably, in the image forming system, the input section receives an instruction on a thinning-out line number to reduce the data amount to compare the output image data with the comparison image data when the selection instruction on the output speed mode is received by the input section.

When the selection instruction to select the output speed mode is received as the comparison condition setting information, each of the comparison image data and the output image data is thinned out in accordance with the thinning-out line number. Accordingly, the comparison image data and the output image data can be compared with each other after the data amounts to be compared are reduced, and hence, as the output speed, a certain speed can be secured.

Preferably, in the image forming system, the input section receives an instruction on a shift amount to shift a position of the thinning-out line number page by page.

Because the comparison image data and the output image data can be compared with each other after the data amounts to be compared are reduced by shifting the position of the thinning-out line number page by page in accordance with the comparison line shift amount, the comparison can be performed on the whole image formation region of paper by printing out a plurality of pages.

Preferably, in the image forming system, the input section receives, as the comparison condition setting information, an instruction on an allowable density range for a pixel of the output image data to a pixel of the comparison image data, and the comparison section compares a density value of the pixel of the output image data with a density value of the pixel of the comparison image data to judge whether or not the density value of the pixel of the output image data is within the allowable density range.

Accordingly, whether the output image data is identical with the comparison image data or not can be judged based on the comparison result, which is obtained by comparing the output image data with the comparison image data on a pixel-to-pixel basis in terms of density values, and judging whether the density value of each pixel of the output image data is within the allowable density range or not.

Preferably, in the image forming system, the input section receives, as the comparison condition setting information, an instruction on an abnormality detection pixel number used as a judgment standard to judge whether or not the output image data is identical with the comparison image data, and the comparison section judges that the output image data is not identical with the comparison image data when a number of the pixel of the output image data, the pixel having the density value being out of the allowable density range, is equal to or more than the abnormality detection pixel number.

Accordingly, whether the output image data is identical with the comparison image data or not can be judged based on the comparison result, which is obtained by comparing the output image data with the comparison image data on a pixel-to-pixel basis in terms of density values, and judging whether the density value of each pixel of the output image data is within the allowable density range or not. Furthermore, when the number of pixels having the density values which are out of the allowable density range is equal to or more than the abnormality detection pixel number, it can be judged that the output image data is not identical with the comparison image data.

Preferably, the image forming system further includes: a display section which displays, when the comparison section judges that the output image data is not identical with the comparison image data and the operation based on the job data is suspended, instruction information to the suspended operation based on the job data such that the instruction information is selectable.

Accordingly, when it is judged that the output image data is not identical with the comparison image data, and accordingly there is abnormality in the output image of the output image data, the operation related to the printing-out is suspended, and the error screen is displayed, whereby the instruction information to the suspended operation based on the job data can be displayed to be selectable.

Preferably, in the image forming system, the display section displays, as the instruction information, job stop information to stop the suspended operation, first resumption information to resume the suspended operation after performing correction processing, and second resumption information to resume the suspended operation, such that the job stop information, the first resumption information, and the second resumption information are selectable.

Accordingly, when it is judged that the output image data is not identical with the comparison image data, and accordingly there is abnormality in the output image of the output image data, the operation related to the printing-out is suspended, and the error screen is displayed, whereby the instruction information (job stop, after-correction resumption, and resumption, for example) to the suspended operation based on the job data can be displayed to be selectable.

Preferably, the image forming system further includes: a resumption setting section which receives an instruction on a copy number and a page number when the first resumption information or the second resumption information is selected, the copy number and the page number from which the suspended operation resumes.

Accordingly, when the after-correction resumption button or the resumption button is selected, the instructions on the copy number and the page number from which the printing-out based on the suspended job data resumes can be received. Accordingly, the printing-out can be resumed from the copy number and the page number which a user desires.

Preferably, the image forming system further includes: an image forming apparatus including: an image forming section which forms an image on paper based the job data; and the operation control section; and an output image reading apparatus provided on a downstream side of the image forming apparatus in paper carry direction, the output image reading apparatus including: the output image reading control section; the storage section; and the comparison section.

Accordingly, loads for control can be divided between the image forming apparatus and the output image reading apparatus. This is because the output image abnormality detection processing is performed by the control section 150 and the output image reading control section 210 in cooperation with each other, it becomes unnecessary to use high-spec arithmetic unit (CPU or the like), and hence costs for an image forming system can be reduced.

## Claims

1. An image forming system comprising:
an output image reading control section which reads an image formed on each of a plurality of output materials to generate output image data when the image is formed on paper and the plurality of output materials is obtained by printing-out based on job data in which a plural-copy-execution number is set;
a storage section which stores output image data of an given output material generated by the output image reading control section as comparison image data;
a comparison section which compares, with the comparison image data, output image data of another output material generated by the output image reading control section after the comparison image data is stored in the storage section, to judge whether or not the output image data is identical with the comparison image data; and
an operation control section which suspends an operation related to the printing-out based on the job data when the comparison section judges that the output image data is not identical with the comparison image data.

2. The image forming system according to claim 1 further comprising:
a comparison image data setting section which performs confirmation printing-out to confirm the image formed based on the job data, the confirmation printing-out by which the given output material is obtained, and stores the output image data of the given output material as the comparison image data in the storage section when an indication that a positive image confirmation result is obtained by the confirmation printing-out is inputted.

3. The image forming system according to claim 1 further comprising:
an input section which receives an instruction on comparison condition setting information to compare the output image data with the comparison image data, wherein
the comparison section compares the output image data with the comparison image data to judge whether or not the output image data is identical with the comparison image data based on the comparison condition setting information.

4. The image forming system according to claim 3, wherein
the input section receives, as the comparison condition setting information, a selection instruction on an output speed mode in which priority is given to an output speed of the output materials or a selection instruction on a comparison accuracy mode in which priority is given to comparison accuracy,
the comparison section reduces a data amount of each of the output image data and the comparison image data to compare the output image data with the comparison image data when the selection instruction on the output speed mode is received by the input section, and
the comparison section compares all the output image data with all the comparison image data when the selection instruction on the comparison accuracy mode is received by the input section.

5. The image forming system according to claim 4, wherein the input section receives an instruction on a thinning-out line number to reduce the data amount to compare the output image data with the comparison image data when the selection instruction on the output speed mode is received by the input section.

6. The image forming system according to claim 5, wherein the input section receives an instruction on a shift amount to shift a position of the thinning-out line number page by page.

7. The image forming system according to claim 3, wherein
the input section receives, as the comparison condition setting information, an instruction on an allowable density range for a pixel of the output image data to a pixel of the comparison image data, and
the comparison section compares a density value of the pixel of the output image data with a density value of the pixel of the comparison image data to judge whether or not the density value of the pixel of the output image data is within the allowable density range.

8. The image forming system according to claim 7, wherein
the input section receives, as the comparison condition setting information, an instruction on an abnormality detection pixel number used as a judgment standard to judge whether or not the output image data is identical with the comparison image data, and
the comparison section judges that the output image data is not identical with the comparison image data when a number of the pixel of the output image data, the pixel having the density value being out of the allowable density range, is equal to or more than the abnormality detection pixel number.

9. The image forming system according to claim 1 further comprising:
a display section which displays, when the comparison section judges that the output image data is not identical with the comparison image data and the operation based on the job data is suspended, instruction information to the suspended operation based on the job data such that the instruction information is selectable.

10. The image forming system according to claim 9, wherein the display section displays, as the instruction information, job stop information to stop the suspended operation, first resumption information to resume the suspended operation after performing correction processing, and second resumption information to resume the suspended operation, such that the job stop information, the first resumption information, and the second resumption information are selectable.

11. The image forming system according to claim 10 further comprising:
a resumption setting section which receives an instruction on a copy number and a page number when the first resumption information or the second resumption information is selected, the copy number and the page number from which the suspended operation resumes.

12. The image forming system according to claim 1 further comprising:
an image forming apparatus including:
an image forming section which forms an image on paper based the job data; and
the operation control section; and
an output image reading apparatus provided on a downstream side of the image forming apparatus in paper carry direction, the output image reading apparatus including:
the output image reading control section;
the storage section; and
the comparison section.
